# FASCICULE DE BREVET EUROPEEN

(11) **EP 3 300 967 B1**
(45) Date de publication et mention de la délivrance du brevet: **15.05.2019**
(21) Numéro de dépôt: 17188098.2
(22) Date de dépôt: 28.08.2017
(51) Int. Cl.: B60S 1/40

(54) **ADAPTATEUR CONSTITUTIF D'UN SYSTEME D'ESSUYAGE**
BESTANDSADAPTER EINES REINIGUNGSSYSTEMS
ADAPTER FORMING PART OF A WIPER SYSTEM

(30) Priorité: 29.09.2016 FR 1659353
(43) Date de publication de la demande: 04.04.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); JOMARD, Olivier, 63500 ISSOIRE (FR)
(74) Mandataire: Valeo Systèmes d'Essuyage

(56) Documents cités:
- WO-A1-2013/013835
- WO-A1-2016/061461
- FR-A1- 3 026 074
- US-A1- 2013 167 317
- US-A1- 2016 207 502

## Description

La présente invention se rapporte aux systèmes d'essuyage pour véhicule automobile, et concerne plus particulièrement un adaptateur qui est constitutif d'un tel système d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché à une partie terminale du bras d'entraînement par l'intermédiaire d'un dispositif de connexion qui comprend un connecteur monté solidaire du balai d'essuyage.

Dans un premier mode de liaison connu, un adaptateur, apte à être assemblé avec le connecteur du balai d'essuyage, est monté mobile en basculement autour d'un axe de fixation sur la partie terminale du bras d'entraînement. Ce premier mode de liaison est couramment utilisé pour les essuie-glaces destinés aux surfaces vitrées situées à l'avant du véhicule automobile. Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule automobile.

L'état de la technique comprend le document US2013/0239356A1 qui décrit un dispositif de fixation comprenant un connecteur qui est porteur du balai d'essuyage, et un adaptateur de raccordement du connecteur à une partie terminale du bras d'entraînement. L'état de la technique comprend aussi les documents FR 3 026 074 A1, WO 2016/061461 A1, US 2016/207502 A1 et US 2013/167317 A1 qui montrent le préambule de la revendication 1.

Un problème général posé dans le domaine réside dans une nécessité de disposer d'un adaptateur apte à coopérer de manière efficace et pérenne avec une partie terminale du bras d'entraînement qui est susceptible d'être de conformation variée.

Plus particulièrement, il est souhaitable de disposer d'un adaptateur qui permette des opérations de maintenance du système d'essuyage qui soient simples et rapides pour permettre à un utilisateur inexpérimenté de les effectuer aisément. Il est notamment souhaitable qu'une opération de remplacement d'un balai d'essuyage usé par un balai d'essuyage neuf puisse se faire facilement et sans risque de détériorer le dispositif de connexion et plus particulièrement l'adaptateur.

Plus particulièrement encore, il est souhaitable de disposer d'un adaptateur qui interdise un déverrouillage inopiné de l'adaptateur rapporté sur la partie terminale du bras d'entraînement, lors de l'utilisation du système d'essuyage mis en mouvement le long de la surface vitrée.

Un but de la présente invention est de proposer un adaptateur qui est agencé pour permettre des opérations de maintenance simples et rapides, tout en participant d'une liaison robuste et pérenne entre un balai d'essuyage et une partie terminale du bras d'entraînement.

Un adaptateur de la présente invention est un adaptateur destiné à équiper une partie terminale d'un bras d'entraînement. L'adaptateur comprend au moins une partie avant dont au moins une section est agencée en « U » et au moins une partie arrière dont au moins une section est agencée en « U », dans lequel la partie avant et la partie arrière sont articulées l'une à l'autre par l'intermédiaire d'un moyen d'articulation, caractérisé en ce que l'adaptateur est pourvu d'un moyen d'actionnement de la partie arrière.

L'adaptateur comporte avantageusement l'une quelconque au moins des caractéristiques suivantes, prises seules ou en combinaison :
- le moyen d'articulation est par exemple une charnière agissant par flexion d'une matière constitutive de l'adaptateur,
- la section agencée en « U » de la partie avant est délimitée par une paroi supérieure avant, une paroi latérale avant gauche et une paroi latérale avant droite, tandis que la section agencée en « U » de la partie arrière est délimitée par une paroi supérieure arrière, une paroi latérale arrière gauche et une paroi latérale arrière droite,
- le moyen d'articulation est interposé entre la paroi latérale avant gauche et la paroi latérale arrière gauche et dans lequel le moyen d'articulation est interposé entre la paroi latérale avant droite et la paroi latérale arrière droite,
- le moyen d'articulation est constitutif d'un bord inférieur de l'adaptateur, le bord inférieur étant ménagé à l'opposé de la paroi supérieure avant et de la paroi supérieure arrière selon un axe vertical,
- la partie avant et la partie arrière sont alignées selon un axe longitudinal. Ainsi, au moins la paroi supérieure avant est coplanaire à la paroi supérieure arrière. De manière complémentaire ou alternative, la paroi latérale avant gauche est coplanaire avec la paroi latérale arrière gauche et/ou la paroi latérale avant droite est coplanaire avec la paroi latérale arrière droite,
- la partie avant et la partie arrière sont alignées selon un axe longitudinal et au moins un premier plan dans lequel s'inscrit la paroi supérieure avant forme un angle non-nul avec un deuxième plan dans lequel s'inscrit la paroi supérieure arrière,
- la partie avant comprend un corps et une extrémité avant, le corps étant relié à la partie arrière par l'intermédiaire du moyen d'articulation,
- l'adaptateur peut comprendre un moyen de rotation configuré pour relier l'adaptateur à un connecteur,
- l'extrémité avant et le corps sont délimités par une bordure qui surplombe le corps,
- la bordure est équipée d'au moins un crochet. On notera que le crochet et la paroi supérieure avant sont agencés pour enserrer une première paroi de la partie terminale du bras d'entrainement,
- la paroi supérieure arrière est équipée d'un bouton pourvu d'une dent,
- une lumière débouchante est ménagée entre la partie avant et la partie arrière,
- la lumière débouchante est par exemple ménagée entre le moyen d'articulation et les parois supérieures,
- la lumière débouchante est notamment bordée par un bord arrière constitutif de la partie avant et par un bord avant constitutif de la partie arrière,
- la partie avant et la partie arrière sont mobiles autour d'un axe d'articulation parallèle à un axe transversal entre une position de repos dans laquelle la paroi supérieure avant et la paroi supérieure arrière forment un premier angle non-nul et une position d'utilisation dans laquelle la paroi supérieure avant et la paroi supérieure arrière forment un deuxième angle inférieur au premier angle,
- la paroi supérieure avant et la paroi supérieure arrière forment encore un angle inférieur au deuxième angle en position de montage de l'adaptateur. Un tel angle peut être égal à 0° ou être négatif par rapport au deuxième angle,
- le bord arrière et le bord avant forment en position de repos un troisième angle non-nul et en position d'utilisation un quatrième angle inférieur au troisième angle,
- le bord arrière et le bord avant forment en position de montage de l'adaptateur un angle inférieur à un quatrième angle. Un tel angle peut être égal à 0° ou être négatif par rapport au quatrième angle,
- au moins une paroi latérale arrière est équipée d'une gorge délimitée au moins par une rampe. Une telle gorge permet de garantir un jeu latéral minimum entre une dimension transversale de l'adaptateur et une dimension transversale de la partie terminale, tout en participant à un montage automatique de l'adaptateur dans la partie terminale, notamment par basculement contrôlé de la partie arrière. Avantageusement, la rampe est configurée pour coopérer avec au moins un plot ménagé sur une face interne de la partie terminale du bras d'entrainement,
- l'adaptateur est pourvu d'un moyen d'actionnement de la partie arrière de l'adaptateur. Un tel moyen d'actionnement prend la forme d'une platine, qui déborde longitudinalement à l'arrière de la partie arrière de l'adaptateur. Ce moyen d'actionnement est la zone sur laquelle l'utilisateur exerce manuellement un effort pour attacher ou séparer l'adaptateur par rapport à la partie terminale du bras d'entraînement.

La présente invention porte aussi sur un dispositif de connexion formé d'un connecteur et d'un adaptateur tel que détaillé dans le présent document, par exemple assemblés l'un à l'autre par le moyen de rotation. Le connecteur est par exemple logé au moins en partie dans un volume interne de l'adaptateur.

L'invention couvre encore un bras d'entraînement comprenant au moins une partie terminale conformée en « U » et délimitée par une première paroi et deux deuxièmes parois délimitant un volume intérieur dans lequel est reçu un adaptateur tel qu'évoqué dans ce document, ou un dispositif de connexion comme présenté ci-dessus.

Avantageusement, la première paroi est pourvue d'un orifice de réception d'un bouton pourvu d'une dent, l'orifice comprenant un bord transversal avant contre lequel le bouton prend appui, la dent s'étendant au-dessus de la première paroi.

L'invention vise aussi un système d'essuyage comprenant un bras d'entraînement, un connecteur solidaire d'un balai d'essuyage et un adaptateur selon l'une quelconque des caractéristiques le définissant, reliant à rotation le connecteur au bras d'entraînement.

La présente invention porte aussi sur un procédé d'assemblage d'un adaptateur tel que décrit dans le présent document avec une partie terminale d'un bras d'entraînement, dans lequel le procédé d'assemblage comprend :
- une première étape de mise en contact d'une bordure de l'adaptateur contre une arête avant d'une première paroi de la partie terminale,
- une deuxième étape qui consiste en une rotation de l'adaptateur vis-à-vis de la partie terminale autour du contact entre la bordure et l'arête avant opéré au cours de la première étape,
- une cinquième étape où une dent d'un bouton de l'adaptateur franchit la première paroi et s'étend au-dessus de celle-ci.

De manière avantageuse, il est prévu entre la deuxième et la cinquième étapes, alternativement ou cumulativement :
- une troisième étape qui consiste en un verrouillage manuel de l'adaptateur dans la partie terminale,
- une quatrième étape qui consiste en un verrouillage automatique de l'adaptateur dans la partie terminale.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue d'un dispositif de connexion de la présente invention participant du système d'essuyage illustré sur la figure 1,
- la figure 3 est une vue de côté d'un adaptateur qui est constitutif du dispositif de connexion illustré sur la figure 2 et qui est représenté en position de repos,
- la figure 4 est une vue de côté de l'adaptateur illustré sur la figure 2 et qui est représenté en position d'utilisation,
- la figure 5 est une vue de côté de l'adaptateur illustré sur la figure 2 et qui est représenté en position de montage,
- la figure 6 est une vue de côté d'une variante de réalisation de l'adaptateur représenté sur les figures 2 à 5,
- la figure 7 est une vue de dessus de l'adaptateur représenté sur la figure 6,
- la figure 8 est une vue en perspective de dessous de l'adaptateur représenté sur les figures 6 et 7,
- la figure 9 est une vue de dessous d'une partie terminale d'un bras d'entrainement participant du système d'essuyage illustré sur la figure 1,
- la figure 10 est une vue en perspective de face de la partie terminale illustrée sur la figure 9,
- la figure 11 est une illustration schématique des étapes d'un procédé d'assemblage de l'adaptateur illustré sur les figures 3 à 8 sur une partie terminale d'un bras d'entraînement.

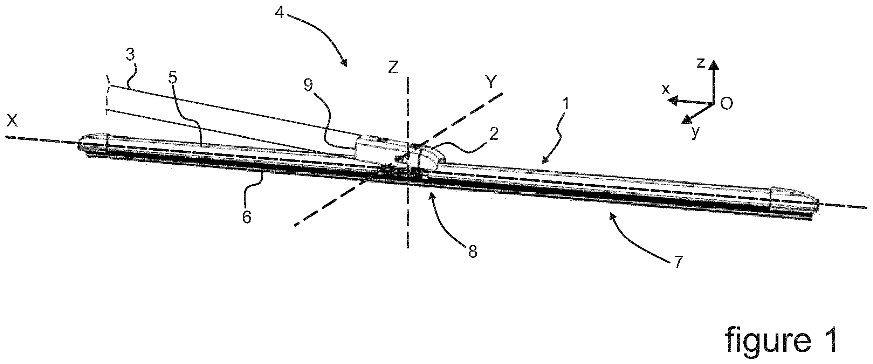

Sur les figures, les dénominations longitudinale, transversale, verticale, latérale, avant, arrière, gauche, droite, supérieure, inférieure, se réfèrent à l'orientation d'un balai d'essuyage 1 illustré sur la figure 1. Une direction longitudinale correspond à un axe longitudinal X selon lequel s'étend le balai d'essuyage 1 et/ou un adaptateur 2 de la présente invention. Une direction transversale correspond à celle d'un axe transversal Y qui est perpendiculaire à l'axe longitudinal X. Les dénominations gauche et droite s'apprécient par rapport à une position le long de l'axe transversal Y, de part et d'autre de l'axe longitudinal X. Une direction verticale, parallèle à celle d'un axe vertical Z, est perpendiculaire aux directions longitudinale et transversale susvisée. Les dénominations supérieure ou inférieure se rapportent à des orientations parallèles à l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 3 du balai d'essuyage 1, la dénomination intérieure correspondant à la partie où le bras d'entraînement 3 et un demi-balai s'étendent, la dénomination extérieure correspondant à la partie où l'autre demi-balai s'étend.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé d'un système d'essuyage 4 pour évacuer une eau et/ou des salissures présentes sur une surface vitrée, notamment une lunette arrière ou un pare-brise de véhicule automobile. Le système d'essuyage 4 comprend le bras d'entraînement 3 qui est apte à effectuer un mouvement de va-et-vient angulaire le long et au-dessus de la surface vitrée.

Le système d'essuyage 4 comprend aussi le balai d'essuyage 1 qui s'étend selon un axe principal, dit axe longitudinal X parallèle à l'axe Ox. Le balai d'essuyage 1 comprend au moins un déflecteur d'air 5 et une lame racleuse 6. Le déflecteur d'air 5 est prévu pour transformer une pression appliquée par un flux d'air circulant le long de la surface vitrée en une force d'appui du balai d'essuyage 1 contre la surface vitrée du véhicule automobile. La lame racleuse 6 est la pièce du balai d'essuyage 1 en contact direct avec la surface vitrée pour évacuer l'eau et/ou les salissures présentes sur cette dernière. Le déflecteur d'air 5 et la lame racleuse 6 forment un ensemble semi-rigide 7 qui est porté par un dispositif de connexion 8, interposé entre le bras d'entraînement 3 et l'ensemble semi-rigide 7.

Le dispositif de connexion 8 assure une liaison mécanique entre une partie terminale 9 du bras d'entraînement 3 et le balai d'essuyage 1 et permet ainsi de séparer le balai d'essuyage 1 du bras d'entraînement 3, en vue d'un remplacement du balai d'essuyage 1. La présente invention vise notamment à proposer un adaptateur 2 qui est agencé pour faciliter une telle opération de remplacement, tout en sécurisant de manière efficace ladite liaison mécanique. Autrement dit, l'adaptateur 2 est particulièrement approprié pour un marché d'après-vente du balai d'essuyage 1.

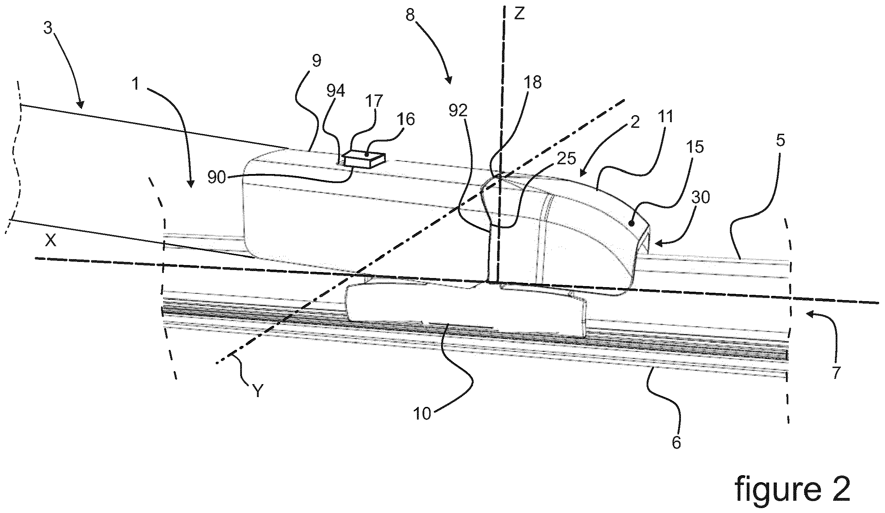

Dans sa généralité, le dispositif de connexion 8 de la présente invention comprend en tout et pour tout deux pièces, dont l'adaptateur 2 et un connecteur 10, visibles ensemble sur la figure 2, où l'adaptateur 2 de la présente invention est en position d'utilisation. Dans cette position d'utilisation, l'adaptateur 2 est rapporté dans la partie terminale 9 du bras d'entraînement 3, selon un procédé de l'invention décrit plus loin.

Le connecteur 10 est apte à porter le balai d'essuyage 1 et est monté en rotation sur l'adaptateur 2. L'adaptateur 2 est prévu pour être fixé à la partie terminale 9 du bras d'entraînement 3. Selon un mode de réalisation de l'invention, l'adaptateur 2 et le connecteur 10 sont réalisés par moulage d'un matériau synthétique, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. L'adaptateur 2 d'une part et le connecteur 10 d'autre part sont chacun d'un seul tenant. Autrement dit, l'adaptateur 2 d'une part et le connecteur 10 d'autre part sont monoblocs et ne peuvent être scindés en plusieurs morceaux qu'à partir d'une destruction de l'adaptateur 2 ou du connecteur 10. La partie terminale 9 est quant à elle par exemple réalisée par pliage d'un feuillard métallique, tel qu'une tôle en aluminium ou analogue ou bien par moulage d'une matière synthétique.

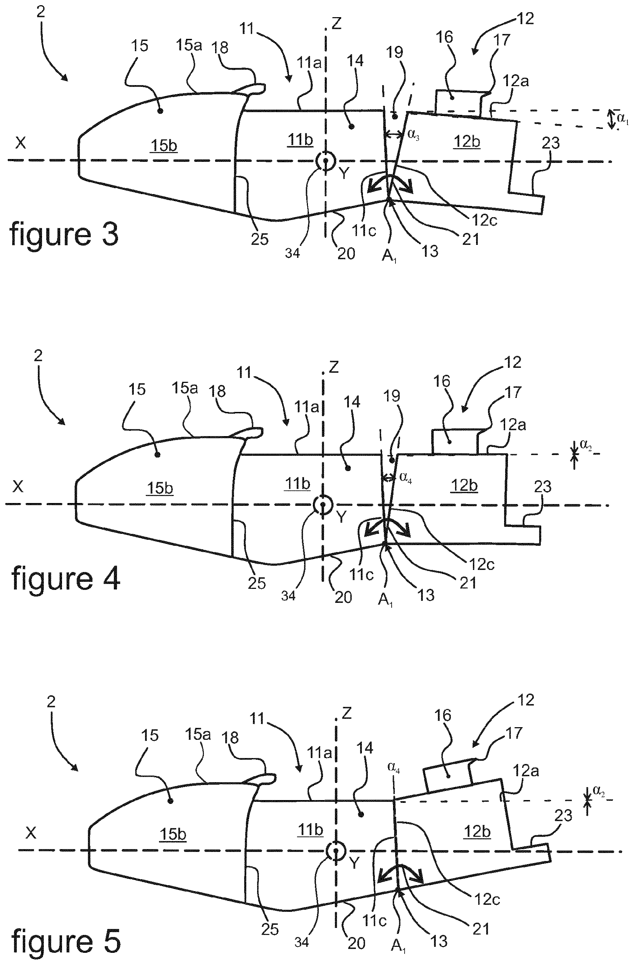

En se reportant aux figures 3 à 5, l'adaptateur 2 est étendu selon l'axe longitudinal X et comporte une partie avant 11 et une partie arrière 12 qui sont articulées l'une à l'autre. La partie avant 11 et la partie arrière 12 sont successives l'une à l'autre le long de l'axe longitudinal X et sont donc alignées l'une après l'autre selon l'axe longitudinal X. La partie avant 11 et la partie arrière 12 sont mobiles l'une par rapport à l'autre autour d'un axe d'articulation A1 qui est orthogonal à l'axe longitudinal X, à l'axe vertical Z et parallèle à l'axe transversal Y. Autrement dit, la partie avant 11 et la partie arrière 12 sont montées en bascule l'une par rapport à l'autre autour de l'axe d'articulation A1. La partie avant 11 et la partie arrière 12 sont reliées l'une à l'autre par un moyen d'articulation 13 qui est interposé entre la partie avant 11 et la partie arrière 12 et qui forme un moyen de liaison entre la partie avant 11 et la partie arrière 12.

La partie avant 11 de l'adaptateur 2 comprend un corps 14 et une extrémité avant 15. Le corps 14 est la portion de la partie avant 11 qui est reliée à la partie arrière 12 par l'intermédiaire du moyen d'articulation 13. Le corps 14 est placé en position intermédiaire entre l'extrémité avant 15 et la partie arrière 12. L'extrémité avant 15, autrement appelé tête d'adaptateur, forme la portion extrême de la partie avant 11 située longitudinalement à l'opposé de la partie arrière 12. Autrement dit, le long de l'axe longitudinal X et depuis l'arrière de l'adaptateur 2 vers l'avant de celui-ci, sont successivement ménagés la partie arrière 12, le moyen d'articulation 13, le corps 14 et l'extrémité avant 15.

La partie avant 11 forme une référence fixe à l'égard de la partie arrière 12, cette dernière étant la portion de l'adaptateur 2 qui tourne autour de la première partie 11 par le biais du moyen de rotation 13.

La partie avant 11 et la partie arrière 12 présentent l'une et l'autre un profil transversal conformé en « U ». Autrement dit, selon une coupe transversale réalisée selon un plan de coupe parallèle au plan Oyz, la partie avant 11 et la partie arrière 12 comportent un profil transversal conformé en « U », ce qui confère à l'adaptateur 2 une structure évidée, avantageusement légère par économie de matière. En d'autres termes, la partie avant 11 comprend une paroi supérieure avant 11a qui forme la base du « U » et deux parois latérales avant 11b, 11b', notamment parallèles ou sensiblement parallèles entre elles et orthogonales, ou sensiblement orthogonales, à la paroi supérieure avant 11a, qui forment les branches du « U ».

L'adaptateur 2 comprend encore un moyen de rotation 34 agencé pour relier l'adaptateur 2 au connecteur 10, tout en autorisant une rotation de l'un par rapport à l'autre. Ce moyen de rotation 34 autorise cette rotation autour de l'axe transversal Y. Le moyen de rotation peut être formé par une paire de torons qui émergent dans la structure évidée de l'adaptateur. Il peut également s'agir de paliers ménagés dans les parois latérales avant 11b, 11b'.

De manière avantageuse, le moyen de rotation 34 est disposé sur l'adaptateur longitudinalement entre l'extrémité avant 15 et le moyen d'articulation 13.

La partie arrière 12 comprend une paroi supérieure arrière 12a qui forme la base du « U » et deux parois latérales arrière 12b, 12b', parallèles ou sensiblement parallèles entre elles et orthogonales ou sensiblement orthogonales à la paroi supérieure arrière 12a, qui forment les branches de la forme en « U ».

Plus particulièrement, la partie avant 11 comprend une paroi latérale avant gauche 11b et une paroi latérale avant droite 11b' tandis que la partie arrière 12 comprend une paroi latérale arrière gauche 12b et une paroi latérale arrière droite 12b'. De préférence, la paroi latérale avant gauche 11b et la paroi latérale arrière gauche 12b sont coplanaires ou sensiblement coplanaires. De préférence, la paroi latérale avant droite 11b' et la paroi latérale arrière droite 12b' sont aussi coplanaires ou sensiblement coplanaires.

La paroi latérale avant gauche 11b et la paroi latérale arrière gauche 12b d'une part ainsi que la paroi latérale avant droite 11b' et la paroi latérale arrière droite 12b' d'autre part sont avantageusement reliées l'une à l'autre par le moyen d'articulation 13. Autrement dit, le moyen d'articulation 13 est interposé entre la paroi latérale avant gauche 11b et la paroi latérale arrière gauche 12b d'une part et entre la paroi latérale avant droite 11b' et la paroi latérale arrière droite 12b' d'autre part.

Par ailleurs, la partie avant 11 comporte un bord arrière 11c qui est en vis-à-vis d'un bord avant 12c que comporte la partie arrière 12. Le moyen d'articulation 13 relie le bord arrière 11c et le bord avant 12c.

Sur la figure 3, l'adaptateur 2 est représenté en position de repos tandis que sur la figure 4 l'adaptateur 2 est représenté en position d'utilisation, c'est-à-dire tel que l'adaptateur 2 est illustré sur la figure 2. La figure 5 illustre enfin l'adaptateur 2 en position de montage. Autrement dit, sur la figure 3, l'adaptateur est représenté hors tout, tel qu'issu de moulage par exemple, tandis que sur la figure 4, l'adaptateur 2 est représenté comme si l'adaptateur 2 était rapporté sur la partie terminale 9 du bras d'entraînement 3, qui n'est pas représentée sur la figure 4 pour conforter la lisibilité. Enfin, l'adaptateur 2 illustré sur la figure 5 est dans une situation où un effort est exercé sur la partie arrière 12 en vue de monter ou démonter l'adaptateur 2 de la partie terminale 9.

Sur la figure 3, la paroi supérieure avant 11a et la paroi supérieure arrière 12a forment un premier angle α₁ non-nul, tandis que sur la figure 4, la paroi supérieure avant 11a et la paroi supérieure arrière 12a sont coplanaires et forment un deuxième angle α₂, qui dans le cas présent est sensiblement nul, suite à la mise en oeuvre du procédé de l'invention décrit ci-après. Selon un autre exemple de position d'utilisation, le deuxième angle α₂ peut être différent de 0°, en étant positif ou négatif, étant entendu que le deuxième angle α₂ est inférieur au premier angle α₁. En position de montage, telle qu'illustrée à la figure 5, l'angle formé entre la paroi supérieure avant 11a et la paroi supérieure arrière 12a est inférieur à 0°, et en tout état de cause inférieur au deuxième angle α₂. Les angles évoqués ci-dessus se mesurent entre un premier plan dans lequel s'étend la paroi supérieure avant 11a et un deuxième plan dans lequel s'étend la paroi supérieure arrière 12a.

De même sur la figure 3, le bord arrière 11c et le bord avant 12c forment un troisième angle α₃ non-nul, préférentiellement compris entre 4° et 6°, préférentiellement égal à 5° tandis que, sur la figure 4, le bord arrière 11c et le bord avant 12c forment un quatrième angle α₄ qui est strictement inférieur au troisième angle α₃, ce quatrième angle α₄ définissant la position d'utilisation. On notera qu'en position de montage telle que visible à la figure 5, le quatrième angle peut être nul, notamment quand le bord arrière 11c est en appui contre le bord avant 12c, de sorte à autoriser le franchissement d'une première paroi 95 de la partie terminale 9 par une dent 17 ménagé sur le bouton 16. Dans cette situation, une lumière débouchante 19 ménagée entre ces deux bords est fermée. La lumière 19 est qualifiée de débouchante en ce sens qu'elle sépare la paroi supérieure avant 11a de la paroi supérieure arrière 12a. La portion de lumière débouchante 19 ménagée entre les parois latérales avant et arrière s'évase en partant d'un bord inférieur 20 et en allant vers les parois supérieures 11a, 12a.

La paroi supérieure arrière 12a est pourvue d'un bouton 16 qui émerge au-dessus de la paroi supérieure arrière 12a. Autrement dit, le bouton 16 surplombe la paroi supérieure arrière 12a en étant placé au-dessus d'un plan formé par cette dernière. Le bouton 16 est conformé pour venir s'imbriquer à l'intérieur d'un orifice 90 que comporte la partie terminale 9 du bras d'entraînement 3, tel qu'illustré sur la figure 2. Le bouton 16 comporte une dent 17 qui surplombe et s'étend par-dessus la paroi supérieure arrière 12a. Une telle dent 17 forme un rebord issu du bouton 16 et qui s'étend longitudinalement vers l'arrière. Autrement dit, la dent 17 du bouton 16 forme une proéminence. Le bouton 16, en particulier sa dent 17, est agencé pour enserrer une épaisseur d'une première paroi 95 de la partie terminale 9 du bras d'entraînement 3. On notera que la longueur du bouton 16 augmenté de sa dent 17, mesurée le long de la direction longitudinale Ox, est inférieure à une longueur de l'orifice 90, mesurée selon la même direction. On permet ainsi au bouton 16 équipé de sa dent 17 de traverser l'orifice 90.

L'extrémité avant 15 est par exemple pourvue d'un crochet 18 qui surplombe au moins partiellement la paroi supérieure avant 11a du corps 14. Le crochet 18 est préférentiellement ménagé à égale distance de l'une et de l'autre des parois latérales avant 11b. Autrement dit, le crochet 18 est de préférence ménagé en un plan longitudinal médian de l'adaptateur 2.

Les parois latérales avant 11b, 11b' et les parois latérales arrière 12b, 12b' sont séparées l'une de l'autre par la lumière débouchante 19 qui s'étend entre le moyen d'articulation 13 d'une part et la paroi supérieure avant 11a et la paroi supérieure arrière 12a de l'adaptateur 2 d'autre part. La lumière débouchante 19 permet un passage des parois latérales avant 11b et des parois latérales arrière 12b lors d'un mouvement de bascule 21 entre la partie avant 11 et la partie arrière 12 autour du moyen d'articulation 13. Autrement dit, lors du mouvement de bascule 21 de la partie avant 11 et/ou de la partie arrière 12 autour du moyen d'articulation 13, le bord arrière 11c de la partie avant 11 et le bord avant 12c de la partie arrière 12 sont aptes à se rapprocher l'un de l'autre ou à s'éloigner l'un de l'autre à partir d'un rétrécissement ou d'un élargissement de la lumière débouchante 19. La lumière débouchante 19 est par exemple conformée en « V » tel qu'illustrée sur les figures 3 à 8.

La partie arrière 12 est par exemple pourvue d'un moyen d'actionnement 23 dont un exemple est formé par une platine qui s'étend à l'intérieur d'un plan parallèle au plan Oxy lorsque l'adaptateur 2 est en position d'utilisation, à l'arrière de la partie arrière 12 et dans une direction longitudinale. Le moyen d'actionnement 23 forme un organe de préhension de la partie arrière 12 pour faire basculer cette dernière entre la position de repos de l'adaptateur 2 et la position de montage de l'adaptateur 2. Un tel moyen d'actionnement 23 permet d'assembler ou de séparer l'adaptateur 2 par rapport à la partie terminale 9 du bras d'entraînement 3.

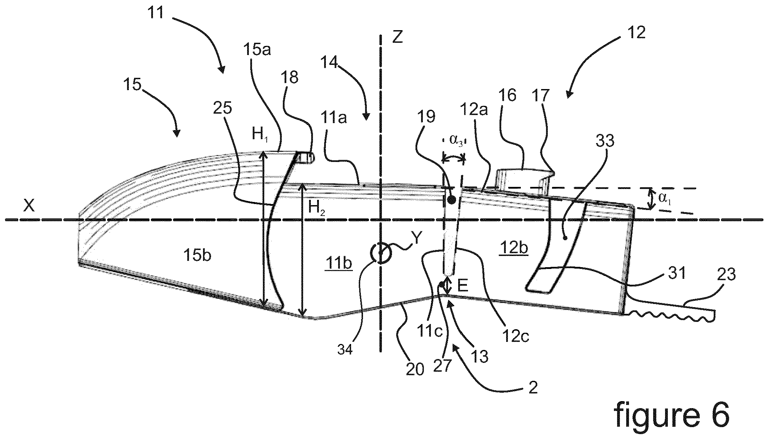

Sur la figure 6, l'extrémité avant 15 est profilé vers l'avant de l'adaptateur 2 de telle sorte que l'extrémité avant 15 présente une hauteur, prise entre une paroi supérieure 15a de l'extrémité avant 15 et le bord inférieur 20 de l'adaptateur 2 selon l'axe vertical Z, qui diminue depuis le corps 14 vers l'avant de l'extrémité avant 15. L'extrémité avant 15 forme un nez qui prolonge longitudinalement la partie terminale 9 de manière à le profiler.

En limite de la partie avant 11 et de l'extrémité avant 15, cette dernière présente une première hauteur verticale H1, prise entre la paroi supérieure 15a de cette extrémité avant 15 et le bord inférieur 20 de l'adaptateur 2 selon la direction Oz, qui est supérieure à une deuxième hauteur verticale H2 du corps 14, prise entre la paroi supérieure avant 11a et le bord inférieur 20 de l'adaptateur 2, selon la même direction Oz. En d'autres termes, l'extrémité avant 15 est plus haute que la première partie 11 de l'adaptateur 2, cette différence de hauteur étant par exemple égale à une épaisseur de la partie terminale 9 du bras d'entrainement 3. De manière complémentaire, l'extrémité avant 15 déborde également au-dessus de la première partie 11, en chevauchant longitudinalement celle-ci, au moins partiellement.

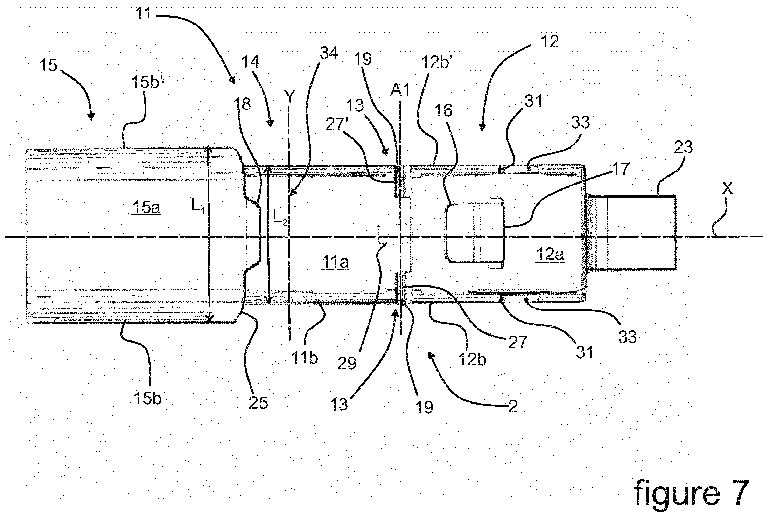

En se reportant sur la figure 7, en limite de la partie avant 11 et de l'extrémité avant 15, cette dernière présente une première largeur transversale L1 prise entre des parois latérales avant 15b, 15b' de l'extrémité avant 15 selon l'axe transversal Y, qui est supérieure à une deuxième largeur transversale L2 du corps 14, prise entre la paroi latérale avant gauche 11b et la paroi latérale avant droite 11b', selon l'axe transversal Y. Il en résulte que l'extrémité avant 15 comporte une bordure 25, autrement appelée épaulement, qui émerge au-dessus de la paroi supérieure avant 11a du corps 14. En d'autres termes, l'extrémité avant 15 est plus large que la première partie 11 de l'adaptateur 2. De manière complémentaire, l'extrémité avant 15 déborde également de chaque côté de la première partie 11. Cette différence de largeur est par exemple égale à deux fois l'épaisseur de la paroi constitutive de la partie terminale 9 du bras d'entrainement 3.

La bordure 25 constitue une butée à l'encontre d'une arête avant 92 que comporte la partie terminale 9 du bras d'entraînement 3.

La bordure 25 est équipée notamment du crochet 18. Le crochet 18 est indifféremment une excroissance de la paroi supérieure 15a de l'extrémité avant 15, tel que représenté sur les figures 3 à 5, ou bien un prolongement de cette paroi supérieure 15a à partir de la bordure 25, tel que représentée sur les figures 6 et 7.

La partie arrière 12 comprend au moins une rampe 31, et notamment deux rampes 31 qui sont ménagées verticalement et respectivement dans les parois latérales arrière 12b, 12b'. Chacune des rampes 31 s'étend dans un plan sensiblement parallèle au plan Oyz. Les rampes 31 délimitent chacune une gorge 33 ménagée dans paroi latérale gauche 12b et dans la paroi latérale droite 12b'.

Sur la figure 7, le moyen d'articulation 13 est par exemple formé d'au moins un pontet 27, 27' qui relie la partie avant 11 et la partie arrière 12. Le moyen d'articulation 13 comprend notamment un pontet gauche 27 reliant la paroi latérale avant gauche 11b et la paroi latérale arrière gauche 12b et un pontet droit 27' reliant la paroi latérale avant droite 11b' et la paroi latérale arrière droite 12b'. Le moyen d'articulation 13 est simple à réaliser, notamment lors du moulage de l'adaptateur 2, une épaisseur E du moyen d'articulation 13 (visible sur la figure 6) étant par exemple inférieure à 15% de la deuxième hauteur H2, l'épaisseur E étant prise selon l'axe vertical Z entre des bords supérieur et inférieur des pontets 27, 27'. Une telle épaisseur des pontets 27, 27' confère une flexibilité au moyen d'articulation 13 permettant l'articulation de la partie arrière 12 vis-à-vis de la partie avant 11.

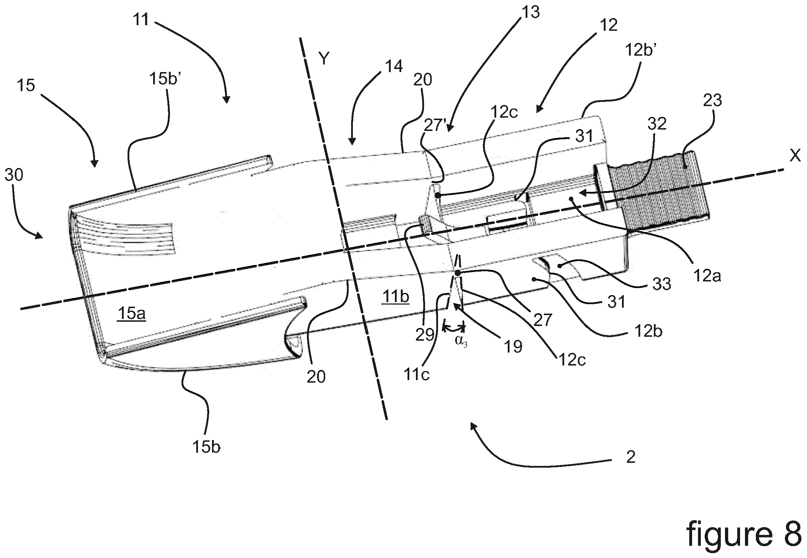

Sur la figure 8, on constate la section en forme de « U » que peut prendre l'adaptateur 2 selon l'invention. Cette section en forme de « U » est formée par la paroi supérieure arrière 12a et les parois latérales arrière 12b, 12b', ainsi que par la paroi supérieure avant 11a et les parois latérales avant 11b, 11b'. Cette forme en « U » délimite un volume interne 32 agencé pour recevoir au moins en partie le connecteur 8 rendu solidaire du balai d'essuyage 1.

Ce volume interne peut également recevoir une languette 29 issue de moulage avec la partie arrière 12, par exemple avec la paroi supérieure arrière 12a de la partie arrière 12. La languette 29 est prévue pour venir en contact contre le connecteur 8 en position d'utilisation de l'adaptateur 2. Une telle languette 29 forme un dispositif de sécurisation de la liaison mécanique entre l'adaptateur 2 et la partie terminale 9 du bras d'entrainement 3. En effet, une fois l'adaptateur 2 installé dans la partie terminale 9, la languette 29 bloque le basculement de la partie arrière 12 par rapport à la partie avant 11, ce qui empêche le bouton 16 de sortir de l'orifice 90, par exemple lorsqu'il est exercé une traction sur le bras d'entrainement alors que le balai d'essuyage 1 est retenu sur le pare-brise par le gel, par exemple.

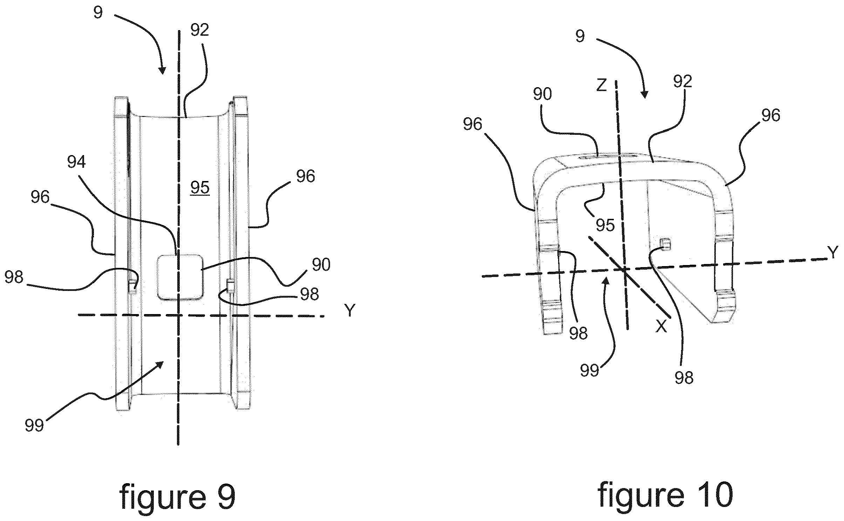

Sur les figures 9 et 10, la partie terminale 9 du bras d'entraînement 3 est agencée en « U », vu dans une coupe transversale parallèle au plan Oyz. La partie terminale 9 comprend une première paroi 95 formant la base du « U » et deux deuxièmes parois 96 sensiblement parallèles et formant les branches du « U ».

La première paroi 95 est équipé de l'orifice 90, ce dernier étant centré latéralement sur la première paroi 95 de la partie terminale 9. La première paroi 95 et les deuxièmes parois 96 sont délimitées en partie avant par l'arête avant 92 qui présente un profil transversal en « U ».

Les deuxièmes parois 96 comportent chacune une surface interne 97 qui délimite, avec la première paroi 95, un volume intérieur 99 de la partie terminale 9. Chaque surface interne 97 est pourvue d'un plot 98 qui émerge de la surface interne 97 vers le volume intérieur 99. Chaque plot 98 est par exemple agencé en un cylindre d'axe perpendiculaire à la surface interne 97. On notera que les deux plots 98 sont situés à égale distance de l'arête avant 92, de sorte qu'une droite passant par le centre de ces deux plots 98 est parallèle à l'axe transversal Y.

L'orifice 90 et les plots 98 sont notamment ménagés à l'intérieur d'un plan transversal parallèle au plan Oxy, de telle sorte que l'orifice 90 surplombe verticalement les plots 98.

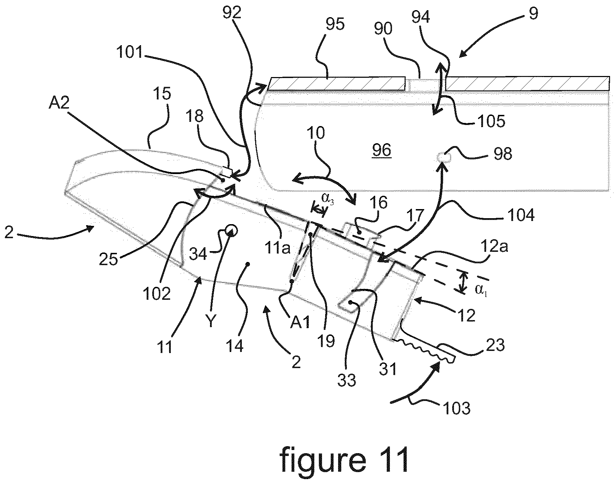

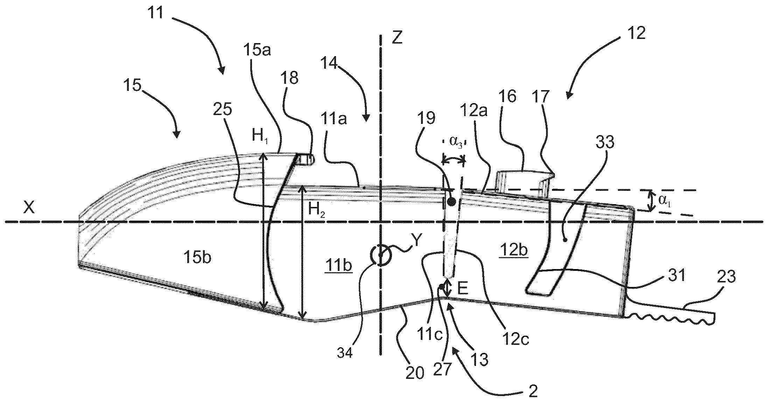

Sur la figure 11, un procédé d'assemblage de l'adaptateur 2 avec une partie terminale 9 du bras d'entraînement 3 comprend une première étape 101 de mise en butée du crochet 18 de l'adaptateur 2 et de l'arête avant 92 de la première paroi 95 de la partie terminale 9. La première paroi 95 vient ainsi se loger entre le crochet 18 et la paroi supérieure avant 11a de la partie avant 11.

Selon une deuxième étape 102 du procédé, il est prévu une mise en rotation de l'adaptateur 2 sur la partie terminale 9 autour d'un deuxième axe de rotation A2 sensiblement parallèle à l'axe transversal Y et passant par un point de contact entre le crochet 18 et l'arête avant 92, tels que rapprochés l'un de l'autre au cours de la première étape 101. Cette rotation est opérée jusqu'à ce que le bouton 16 soit disposé au droit de l'orifice 90.

A ce stade du procédé d'assemblage, le blocage de l'adaptateur 2 dans la partie terminale 9 peut être opéré selon deux étapes alternatives ou cumulatives.

Selon l'une de ces alternatives, le procédé comprend une troisième étape 103 qui consiste à exercer un effort sur la partie arrière 12 de sorte à la rapprocher de la partie avant 11 par le biais du moyen d'articulation 13. Un tel effort peut être exercé en appliquant une pression manuelle sur la platine arrière 23. Cette troisième étape 103 conduit à une réduction du premier angle α₁ (figure 5) et à une réduction du troisième angle α₃ (figure 5). La lumière débouchante 19 est alors fermée, ce qui conduit à rapprocher longitudinalement le bouton 16 de l'extrémité avant 15. Ce déplacement longitudinal du bouton 16 décale la dent 17 de sorte à lui permettre de pénétrer dans l'orifice 90. De manière synthétique, la troisième étape 103 consiste en un verrouillage manuel de l'adaptateur 2 dans la partie terminale 9.

Selon l'autre alternative, le procédé comprend une quatrième étape qui consiste en un verrouillage automatique de l'adaptateur 2 dans la partie terminale 9. En poursuivant la rotation débutée à la deuxième étape 102, les plots 98 pénètrent dans les gorges 33. Ce faisant, les plots 98 viennent en appui contre les rampes 31 de l'adaptateur 2, et coulissent contre ces dernières. Cette mise en appui provoque un effort qui génère un alignement de la paroi supérieure avant 11a avec la paroi supérieure arrière 12a, conduisant à une réduction du premier angle α₁ (figure 5) et à une réduction du troisième angle α₃ (figure 5). La lumière débouchante 19 est alors fermée, ce qui conduit à rapprocher longitudinalement le bouton 16 de l'extrémité avant 15. Ce déplacement longitudinal du bouton 16 décale la dent 17 de sorte à lui permettre de pénétrer dans l'orifice 90.

Dans les deux cas présenté ci-dessus, il en résulte une mise sous contrainte de la partie arrière 2 qui tend ensuite à reprendre sa position de repos dans laquelle la paroi supérieure avant 11a et de la paroi supérieure arrière 12a forment le deuxième angle α₂.

Selon une cinquième étape 105, on poursuit la rotation opérée au cours de la deuxième étape 102 de sorte à ce que la dent 17 franchisse la première paroi 95 et se retrouve au-dessus de celle-ci. Une fois que la paroi supérieure arrière 12a est en appui contre une face interne de la première paroi 95 de la partie terminale 9, une mise en contact du bouton 16 contre le bord transversal avant 94 de l'orifice 90 est opérée, à partir d'une tendance de la partie arrière 12 à reprendre sa position de repos lorsque l'effort de flexion est interrompu. Il en résulte ainsi un verrouillage optimisé de l'adaptateur 2 dans la partie terminale 9 et une interdiction d'un déverrouillage inopiné de l'adaptateur 2 rapporté sur la partie terminale 9 du bras d'entraînement 3, notamment lors de l'utilisation du système d'essuyage 4 mis en mouvement le long de la surface vitrée.

L'invention permet de solidariser ainsi simplement un balai d'essuyage sur une partie terminale de bras telle qu'illustré dans le présent document. L'adaptateur seul, ou le balai d'essuyage comprenant un tel adaptateur forme un article de commerce vendu dans les réseaux après-vente de commerce de pièce automobile.

## Revendications

1. Adaptateur (2) destiné à équiper une partie terminale (9) d'un bras d'entraînement (3), l'adaptateur (2) comprenant au moins une partie avant (11) dont au moins une section est agencée en « U » et au moins une partie arrière (12) dont au moins une section est agencée en « U », dans lequel la partie avant (11) et la partie arrière (12) sont articulées l'une à l'autre par l'intermédiaire d'un moyen d'articulation (13), **caractérisé en ce que** l'adaptateur (2) est pourvu d'un moyen d'actionnement (23) de la partie arrière (12).

2. Adaptateur (2) selon la revendication 1, dans lequel la section agencée en « U » de la partie avant (11) est délimitée par une paroi supérieure avant (11a), une paroi latérale avant gauche (11b) et une paroi latérale avant droite (11b'), tandis que la section agencée en « U » de la partie arrière (12) est délimitée par une paroi supérieure arrière (12a), une paroi latérale arrière gauche (12b) et une paroi latérale arrière droite (12b').

3. Adaptateur (2) selon la revendication 1 ou 2, dans lequel le moyen d'articulation (13) est interposé entre la paroi latérale avant gauche (11b) et la paroi latérale arrière gauche (12b) et dans lequel le moyen d'articulation (13) est interposé entre la paroi latérale avant droite (11b') et la paroi latérale arrière droite (12b').

4. Adaptateur (2) selon l'une quelconque des revendications précédentes, dans lequel la partie avant (11) et la partie arrière (12) sont alignées selon un axe longitudinal (X) de l'adaptateur (2).

5. Adaptateur (2) selon l'une quelconque des revendications précédentes, dans lequel la partie avant (11) comprend un corps (14) et une extrémité avant (15), le corps (14) étant relié à la partie arrière (12) par l'intermédiaire du moyen d'articulation (13).

6. Adaptateur (2) selon la revendication 5, dans lequel l'extrémité avant (15) et le corps (14) sont délimités par une bordure (25) qui surplombe le corps (14).

7. Adaptateur (2) selon la revendication 6, dans lequel la bordure (25) est équipée d'au moins un crochet (18).

8. Adaptateur (2) selon l'une quelconque des revendications précédentes, comprenant un moyen de rotation (34) configuré pour relier l'adaptateur (2) à un connecteur (10).

9. Adaptateur (2) selon l'une quelconque des revendications précédentes prise en combinaison avec la revendication 2, dans lequel la paroi supérieure arrière (12a) est équipée d'un bouton (16) pourvu d'une dent (17).

10. Adaptateur (2) selon l'une quelconque des revendications précédentes prise en combinaison avec la revendication 2, dans lequel au moins une paroi latérale arrière (12b, 12b') est équipée d'une gorge (33) délimitée au moins par une rampe (31).

11. Dispositif de connexion (8) formé d'un connecteur (10) et d'un adaptateur (9) selon l'une quelconque des revendications précédentes.

12. Bras d'entraînement (3) comprenant au moins une partie terminale (9) conformée en « U » et délimitée par une première paroi (95) et par deux deuxièmes parois (96) délimitant un volume intérieur (99) dans lequel est reçu un adaptateur (2) selon l'une quelconque des revendications 1 à 10 ou un dispositif de connexion (8) selon la revendication précédente.

13. Bras d'entraînement (3) selon la revendication précédente, dans lequel la première paroi (95) est pourvue d'un orifice (90) de réception d'un bouton (16) pourvu d'une dent (17), l'orifice (90) comprenant un bord transversal avant (94) contre lequel le bouton (16) prend appui, la dent (17) s'étendant au-dessus de la première paroi (95).

14. Système d'essuyage comprenant un bras d'entraînement (3), un connecteur (10) solidaire d'un balai d'essuyage (1) et un adaptateur (2) selon l'une quelconque des revendications 1 à 10 reliant à rotation le connecteur (10) au bras d'entraînement (3).

15. Procédé d'assemblage d'un adaptateur (2) selon l'une quelconque des revendications 1 à 10 avec une partie terminale (9) d'un bras d'entraînement (3), dans lequel le procédé d'assemblage comprend :
- une première étape (101) de mise en contact d'une bordure (25) de l'adaptateur (2) contre une arête avant (92) d'une première paroi (95) de la partie terminale (9),
- une deuxième étape (102) qui consiste en une rotation de l'adaptateur (2) vis-à-vis de la partie terminale (9) autour du contact entre la bordure (25) et l'arête avant (92) opéré au cours de la première étape (101),
- une cinquième étape (105) où une dent (17) d'un bouton (16) de l'adaptateur (2) franchit la première paroi (95) et s'étend au-dessus de celle-ci.

16. Procédé d'assemblage selon la revendication précédente, au cours duquel est prévu entre la deuxième et la cinquième étapes, alternativement ou cumulativement :
- une troisième étape (103) qui consiste en un verrouillage manuel de l'adaptateur (2) dans la partie terminale (9),
- une quatrième étape (104) qui consiste en un verrouillage automatique de l'adaptateur (2) dans la partie terminale (9).

## Patentansprüche

1. Adapter (2), welcher zur Ausrüstung eines Endteils (9) eines Antriebsarms (3) bestimmt ist, wobei der Adapter (2) wenigstens einen vorderen Teil (11), von dem wenigstens ein Abschnitt U-förmig ausgebildet ist, und wenigstens einen hinteren Teil (12), von dem wenigstens ein Abschnitt U-förmig ausgebildet ist, umfasst, wobei der vordere Teil (11) und der hintere Teil (12) über ein Gelenkmittel (13) aneinander angelenkt sind, **dadurch gekennzeichnet, dass** der Adapter (2) mit einem Betätigungsmittel (23) des hinteren Teils (12) versehen ist.

2. Adapter (2) nach Anspruch 1, wobei der U-förmig ausgebildete Abschnitt des vorderen Teils (11) von einer vorderen oberen Wand (11a), einer linken vorderen Seitenwand (11b) und einer rechten vorderen Seitenwand (11b') begrenzt wird, während der U-förmig ausgebildete Abschnitt des hinteren Teils (12) von einer hinteren oberen Wand (12a), einer linken hinteren Seitenwand (12b) und einer rechten hinteren Seitenwand (12b') begrenzt wird.

3. Adapter (2) nach Anspruch 1 oder 2, wobei das Gelenkmittel (13) zwischen der linken vorderen Seitenwand (11b) und der linken hinteren Seitenwand (12b) angeordnet ist und wobei das Gelenkmittel (13) zwischen der rechten vorderen Seitenwand (11b') und der rechten hinteren Seitenwand (12b') angeordnet ist.

4. Adapter (2) nach einem der vorhergehenden Ansprüche, wobei der vordere Teil (11) und der hintere Teil (12) entlang einer Längsachse (X) des Adapters (2) ausgerichtet sind.

5. Adapter (2) nach einem der vorhergehenden Ansprüche, wobei der vordere Teil (11) einen Körper (14) und ein vorderes Ende (15) umfasst, wobei der Körper (14) mit dem hinteren Teil (12) über das Gelenkmittel (13) verbunden ist.

6. Adapter (2) nach Anspruch 5, wobei das vordere Ende (15) und der Körper (14) durch eine Einfassung (25) begrenzt sind, welche über den Körper (14) überhängt.

7. Adapter (2) nach Anspruch 6, wobei die Einfassung (25) mit wenigstens einem Haken (18) ausgestattet ist.

8. Adapter (2) nach einem der vorhergehenden Ansprüche, welcher ein Rotationsmittel (34) umfasst, das dafür ausgelegt ist, den Adapter (2) mit einem Verbinder (10) zu verbinden.

9. Adapter (2) nach einem der vorhergehenden Ansprüche in Kombination mit Anspruch 2, wobei die hintere obere Wand (12a) mit einem Knopf (16) ausgestattet ist, der mit einem Zahn (17) versehen ist.

10. Adapter (2) nach einem der vorhergehenden Ansprüche in Kombination mit Anspruch 2, wobei wenigstens eine hintere Seitenwand (12b, 12b') mit einer Rille (33) ausgestattet ist, die von wenigstens einer Rampe (31) begrenzt wird.

11. Verbindungsvorrichtung (8), die von einem Verbinder (10) und von einem Adapter (9) nach einem der vorhergehenden Ansprüche gebildet wird.

12. Antriebsarm (3), welcher wenigstens einen Endteil (9) umfasst, der U-förmig ausgebildet ist und von einer ersten Wand (95) und von zwei zweiten Wänden (96) begrenzt wird, die ein Innenvolumen (99) begrenzen, in welchem ein Adapter (2) nach einem der Ansprüche 1 bis 10 oder eine Verbindungsvorrichtung (8) nach dem vorhergehenden Anspruch aufgenommen ist.

13. Antriebsarm (3) nach dem vorhergehenden Anspruch, wobei die erste Wand (95) mit einer Öffnung (90) zur Aufnahme eines Knopfes (16) versehen ist, der mit einem Zahn (17) versehen ist, wobei die Öffnung (90) einen vorderen Querrand (94) umfasst, an dem der Knopf (16) zur Anlage kommt, wobei der Zahn (17) sich oberhalb der ersten Wand (95) erstreckt.

14. Wischsystem, welches einen Antriebsarm (3), einen Verbinder (10), der mit einem Wischblatt (1) fest verbunden ist, und einen Adapter (2) nach einem der Ansprüche 1 bis 10, der den Verbinder (10) mit dem Antriebsarm (3) drehbar verbindet, umfasst.

15. Verfahren zum Zusammenbau eines Adapters (2) nach einem der Ansprüche 1 bis 10 mit einem Endteil (9) eines Antriebsarms (3), wobei das Verfahren zum Zusammenbau umfasst:
- einen ersten Schritt (101) des Inkontaktbringens einer Einfassung (25) des Adapters (2) mit einer vorderen Kante (92) einer ersten Wand (95) des Endteils (9),
- einen zweiten Schritt (102), welcher in einer Drehung des Adapters (2) in Bezug auf den Endteil (9) um den Kontakt zwischen der Einfassung (25) und der vorderen Kante (92), der während des ersten Schritts (101) hergestellt wird, besteht,
- einen fünften Schritt (105), wo ein Zahn (17) eines Knopfes (16) des Adapters (2) die erste Wand (95) überquert und sich oberhalb derselben erstreckt.

16. Verfahren zum Zusammenbau nach dem vorhergehenden Anspruch, bei welchem zwischen dem zweiten und dem fünften Schritt, alternativ oder kumulativ, vorgesehen ist:
- ein dritter Schritt (103), welcher in einer manuellen Verriegelung des Adapters (2) in dem Endteil (9) besteht,
- ein vierter Schritt (104), welcher in einer automatischen Verriegelung des Adapters (2) in dem Endteil (9) besteht.

## Claims

1. Adapter (2) intended to be fitted to an end part (9) of a drive arm (3), the adapter (2) comprising at least one front part (11), at least one section of which is U-shaped, and at least one rear part (12), at least one section of which is U-shaped, wherein the front part (11) and the rear part (12) are hinged together via a hinge means (13), **characterized in that** the adapter (2) is provided with a means (23) for actuating the rear part (12).

2. Adapter (2) according to claim 1, wherein the U-shaped section of the front part (11) is delimited by a front upper wall (11a), a left front side wall (11b) and a right front side wall (11b'), whereas the U-shaped section of the rear part (12) is delimited by a rear upper wall (12a), a left rear side wall (12b) and a right rear side wall (12b').

3. Adapter (2) according to claim 1 or 2, wherein the hinge means (13) is interposed between the left front side wall (11b) and the left rear side wall (12b), and wherein the hinge means (13) is interposed between the right front side wall (11b') and the right rear side wall (12b').

4. Adapter (2) as claimed in any of the preceding claims, wherein the front part (11) and the rear part (12) are aligned along a longitudinal axis (X) of the adapter (2).

5. Adapter (2) as claimed in any of the preceding claims, wherein the front part (11) comprises a body (14) and a front end (15), the body (14) being connected to the rear part (12) via the hinge means (13).

6. Adapter (2) according to claim 5, wherein the front end (15) and the body (14) are delimited by a rim (25) which overhangs the body (14).

7. Adapter (2) according to claim 6, wherein the rim (25) is fitted with at least one hook (18).

8. Adapter (2) as claimed in any of the preceding claims, comprising a rotation means (34) configured to connect the adapter (2) to a connector (10).

9. Adapter (2) as claimed in any of the preceding claims taken in combination with claim 2, wherein the rear upper wall (12a) is equipped with a knob (16) provided with a tooth (17).

10. Adapter (2) as claimed in any of the preceding claims taken in combination with claim 2, wherein at least one rear side wall (12b, 12b') is equipped with a groove (33) delimited by at least one ramp (31).

11. Connecting device (8) formed by a connector (10) and an adapter (9) according to any of the preceding claims.

12. Drive arm (3) comprising at least one U-shaped end part (9) delimited by a first wall (95) and by two second walls (96) defining an inner volume (99) receiving an adapter (2) according to any of claims 1 to 10 or a connecting device (8) according to the preceding claim.

13. Drive arm (3) according to the preceding claim, wherein the first wall (95) is provided with an orifice (90) for receiving a knob (16) provided with a tooth (17), the orifice (90) comprising a front transverse edge (94) against which the knob (16) rests, the tooth (17) extending above the first wall (95).

14. Wiper system comprising a drive arm (3), a connector (10) attached to a wiper arm (1) and an adapter (2) according to any of claims 1 to 10 connecting the connector (10) to the drive arm (3) rotationally.

15. Method for assembling an adapter (2) according to any of claims 1 to 10 to an end part (9) of a drive arm (3), wherein the assembly method comprises:
- a first step (101) of bringing a rim (25) of the adapter (2) into contact with a front edge (92) of a first wall (95) of the end part (9),
- a second step (102) which comprises rotating the adapter (2) relative to the end part (9) around the contact between the rim (25) and the front edge (92), performed during the first step (101),
- a fifth step (105) in which a tooth (17) of a knob (16) of the adapter (2) passes over the first wall (95) and extends above this.

16. Assembly method according to the preceding claim, during which, between the second and fifth steps, alternatively or cumulatively, the following steps are performed:
- a third step (103) which consists of manual locking of the adapter (2) into the end part (9),
- a fourth step (104) which consists of automatic locking of the adapter (2) into the end part (9).
